# EUROPÄISCHE PATENTSCHRIFT

(11) **EP 0 650 882 B1**
(45) Veröffentlichungstag und Bekanntmachung des Hinweises auf die Patenterteilung: **19.03.1997**
(21) Anmeldenummer: 94116376.8
(22) Anmeldetag: 18.10.1994
(51) Int. Cl.: B62D 25/18

(54) **Schmutzfänger für Kraftfahrzeuge**
Mud flap for motor cars
Bavette de garde boue pour véhicules

(30) Priorität: 27.10.1993 DE 4336667
(43) Veröffentlichungstag der Anmeldung: 03.05.1995
(73) Patentinhaber: WEGU Gummi- und Kunststoffwerke Walter Dräbing KG, D-34123 Kassel (DE)
(72) Erfinder: Brill, Hartmut, D-37242 Bad Sooden-Allendorf-Dudenrode (DE)
(74) Vertreter: Rehberg, Elmar, Dipl.-Ing.

(56) Entgegenhaltungen:
- EP-A- 0 223 472
- DE-U- 7 439 311
- US-A- 2 077 818
- PATENT ABSTRACTS OF JAPAN vol. 14, no. 203 (M-0966) 25. April 1990 & JP-A-02 041 985 (KINUGAWA RUBBER) 13. Februar 1990

## Beschreibung

Die Erfindung bezieht sich auf einen Schmutzfänger für Kraftfahrzeuge mit einem Lappenkörper zur Befestigung an einer insbesondere dreidimensional gekrümmten Außenkante eines Kotflügels mit den im Oberbegriff des Anspruchs 1 angegebenen Merkmalen.

Die Außenkanten der Kotflügel verschiedener Kraftfahrzeugtypen weisen unterschiedliche, in der Regel dreidimensionale Krümmungen auf. Schmutzfänger, die an diesen Kotflügeln befestigt werden sollen, müssen daher entweder bereits bei der Herstellung an die jeweilige Krümmung der Außenkante angepaßt oder nachträglich anpaßbar sein. Die vorliegende Erfindung bezieht sich auf nachträglich anpaßbare Schmutzfänger, die auch als Universal-Schmutzfänger bezeichnet werden. Universal-Schmutzfänger sind insbesondere im Bereich des Zubehör- und Ersatzteilhandels, wie er auch durch kleinere Werkstätten und Tankstellen betrieben wird, vorteilhaft. Sie vermeiden die Notwendigkeit, für die verschiedenen Kraftfahrzeugtypen gesonderte Schmutzfänger vorrätig zu halten.

Ein Schmutzfänger der eingangs beschriebenen Art ist aus der EP-A-0 223 472 bekannt, welche alle Merkmale des Oberbegriffs des Patentanspruchs 1 offenbart. Der zwischen Befestigungsabschnitt und Lappenkörper angeordnete Verformbereich erstreckt sich im wesentlichen senkrecht zu der Fläche des Befestigungsabschnitts. Der Verformbereich muß hinreichend elastisch und verformbar sein, damit der Schmutzfänger an unterschiedlich gekrümmten Kotflügeln ansetzbar ist. Um dies zu ereichen, können der Verformbereich und der Lappenkörper aus dem gleichen flexiblen Material oder aus Materialien mit unterschiedlichen flexiblen Eigenschaften hergestellt werden.

Der aus der JP-A-02 041 985 bekannte Schmutzfänger zeigt einen gefaltet ausgebildeten Verformbereich, der zwischen einem Befestigungsabschnitt und dem Lappenkörper angeordnet ist.

Aus der DE 28 57 822 C1 ist ein Schmutzfänger bekannt, bei dem der Lappenkörper zum Kotflügel hin in einem streifenförmigen Befestigungsabschnitt endet, der zur Anpassung des Schmutzfängers an eine dreidimensionale Kotflügelform aus der Haupterstreckungsebene heraus verbiegbar ist. Um diese Verformung auf den Befestigungsabschnitt zu beschränken, weist der Lappenkörper unterhalb des Befestigungsabschnitts etwa horizontal verlaufende Verformbereiche auf. Die Verformbereiche weisen die Form von spitzwinkligen Dreiecken auf, die sich vom inneren freien Rand des Lappenkörpers in den Lappenkörper hinein erstrecken. In den Verformbereichen ist der Lappenkörper aus demselben Material ausgebildet wie außerhalb. Er weist dort jedoch eine geringere Materialdicke auf. Der Umriß der Verformbereiche läßt nahezu ausschl. ein Verknicken des Lappenkörpers senkrecht zu seiner Haupterstreckungsebene zu. Eine Verformung in der Haupterstreckungsebene des Lappenkörpers ermöglichen die Verformbereiche bei dem bekannten Schmutzfänger nicht.

Ein weiterer Schmutzfänger ist aus der DE-PS 23 42 365 bekannt. Der Schmutzfänger weist zum Kotflügel hin einen Befestigungsabschnitt auf, in dem der einstückig und durchgängig ausgebildete Lappenkörper durch einen plastisch verformbaren Metallstreifen verstärkt ist. Durch die Verformung des Metallstreifens ist der Schmutzfänger in gewissen Grenzen an verschiedene Kraftfahrzeugtypen, d. h. verschiedene Kotflügelformen anpaßbar. Beim Verformen des Metallstreifens wird auch der Lappenkörper mitverformt. Die dabei entstehende Form des Lappenkörpers ist jedoch nur dann brauchbar, wenn der Befestigungsabschnitt des Schmutzfängers wenigstens in etwa an die jeweilige Kotflügelform angepaßt ist. D. h., der Toleranzbereich des bekannten Universal-Schmutzfängers hinsichtlich verschiedener Kotflügelformen ist nicht besonders groß.

Aus dem DE 79 08 127 U1 ist ein Schmutzfänger bekannt, bei dem der Lappenkörper zum Kotflügel hin einen streifenförmigen Befestigungsabschnitt aufweist, der relativ zu dem restlichen Lappenkörper abgewinkelt ausgerichtet ist. Dabei ist der Lappenkörper wiederum einstückig ausgebildet und weist eine durchgängige, daß heißt konstante Dicke auf. Durch den abgewinkelten Befestigungsabschnitt überträgt sich die Verformung des Befestigungsabschnitts bei der Anpassung des Schmutzfängers an verschiedene Kotflügelformen in reduziertem Umfang auf den restlichen Lappenkörper. Auf diese Weise ist der Toleranzbereich dieses Universal-Schmutzfängers erhöht. Er reicht jedoch immer noch nicht aus, damit ein einziger Schmutzfänger für nahezu alle herkömmlichen Kotflügelformen als ausreichend angesehen werden kann.

Beispielsweise auch aus dem DE 79 08 127 U1 ist es bekannt, den Lappenkörper von Schmutzfängern für Kraftfahrzeuge insbesondere im Bereich seiner senkrecht zu der Kotflügelkante verlaufenden Begrenzungskanten durch Rippen o. dgl. verstärkt auszubilden. Hierdurch wird eine verbesserte Formstabilität des am Kotflügel angebrachten Schmutzfängers erreicht.

Aus der US-PS 4 877 268 ist ein Schmutzfänger bekannt, der bereits bei seiner Herstellung eine dreidimensionale gekrümmte Form erhalten hat. Die Anpassung des Schmutzfängers an eine bestimmte Kotflügelform erfolgt durch Ausschneiden der Kotflügelform aus dem Lappenkörper. In seinem unteren Bereich weist dieser Lappenkörper bis an seinen freien Rand an der Innenseite reichende horizontale Falten auf.

Das DE-GM 74 39 311 zeigt einen Schmutzfänger für Lastkraftwagen mit einem ebenen Lappenkörper, der mittels eines Befestigungsteils scharnierartig an der Unterkante eines Kotflügels befestigbar ist. Hierzu weist der Lappenkörper einen linienförmigen Befestigungsabschnitt mit einer wulstförmigen Verdickung zum Einschieben in eine nutförmige Ausnehmung in dem ebenfalls linienförmigen Befestigungsteil auf. Weder der Befestigungsabschnitt des Lappenkörpers noch das Befestigungsteil sind bei dem bekannten Schmutzfänger zu einer Verformung aus der Linienform vorgesehen.

Aus dem DE-GM 69 42 541 ist ein Schmutzfänger mit einem Lappenkörper und einem Befestigungsteil für die Befestigung des Lappenkörpers an der Außenkante eines Kotflügels bekannt. Der Lappenkörper weist eine durchgehende Dichtlippe zur äußeren Anlage an den Kotflügel auf. Zur Befestigung der Dichtlippe an dem Kotflügel und zur gleichzeitigen Befestigung des Lappenkörpers an der Dichtlippe sind voneinander beabstandete Halteelemente vorgesehen. Die Halteelemente weisen jeweils eine Klemmschraube und Vorsprünge zum Eingreifen in entsprechende Durchbrechungen in dem Lappenkörper auf. Der bekannte Schmutzfänger kann so nur als ganzes an einen Kotflügel montiert werden, d. h. Befestigungsteil, Dichtlippe und Lappenkörper müssen hierbei zusammengesetzt werden, wodurch die Klemmschrauben der Halteelemente nur noch schwer erreichbar sind.

Der Erfindung liegt die Aufgabe zugrunde, einen Schmutzfänger aufzuzeigen, der als echter Universal-Schmutzfänger in einer einzigen Grundform für nahezu alle Kotflügelformen geeignet ist.

Erfindungsgemäß wird dies durch die Merkmalskombination des Patentanspruchs 1 erreicht. Durch die Verformbarkeit auch innerhalb der Haupterstreckungsebene des Lappenkörpers ist der Verformbereich in der Lage, die notwendige Verformung des Lappenkörpers zur Anlage an verschieden geformte Kotflügel aufzunehmen. Unter dem Verformbereich ist keine Sollknickstelle des Lappenkörpers zu verstehen, obwohl in dem Verformbereich bei der Anpassung des Schmutzfängers an verschiedene Kotflügelformen auch ein Abwinkeln des Lappenkörpers erfolgen kann. Es kommt hier jedoch vornehmlich auf die Verformbarkeit in Richtung der Haupterstreckungsebene des Lappenkörpers an. D. h., daß die Breite des Verformbereichs bei der Anpassung des Schmutzfängers an den jeweiligen Kotflügel verändert wird. Dabei kann die Breite lokal sowohl zu- als auch abnehmen. Um trotz des Verformbereichs mit dem verringerten Verformungswiderstand eine ausreichende Stabilität des Schmutzfängers sicherzustellen, ist der Verformbereich vollständig durch den restlichen Lappenkörper umschlossen. Gleichzeitig ist der Verformbereich jedoch über die wesentliche Erstreckung des Lappenkörpers entlang der Kotflügelkante ausgedehnt, um in dem gesamten Anlagebereich des Schmutzfängers an die Außenkante des Kotflügels die zur Anpassung des Schmutzfängers an verschiedene Kotflügelformen notwendige Verformungsmöglichkeit zu gewährleisten. Zum Kotflügel hin endet der Lappenkörper in einem streifenförmigen Befestigungsabschnitt mit geringer Erstreckung senkrecht zu der Außenkante des Kotflügels, wobei der Verformbereich direkt an den Befestigungsabschnitt angrenzt. Ein derartiger, quasi linienförmiger Befestigungsabschnitt ist problemlos an unterschiedlichste dreidimensional gekrümmte Kotflügelformen anpaßbar. Die Krümmung wird in dem sich direkt an den Befestigungsabschnitt anschließenden Verformbereich kompensiert und nicht auf den restlichen Lappenkörper übertragen. Auf diese Weise wird eine übermäßige Verformung des restlichen Lappenkörpers zuverlässig verhindert.

Der Lappenkörper kann an seinen senkrecht zu der Außenkante des Kotflügels verlaufenden Begrenzungskanten bis in den Befestigungsabschnitt hinein verstärkt ausgebildet sein. Auch bei dem neuen Schmutzfänger ist es sinnvoll, den Lappenkörper mit beispielsweise rippenartigen Verstärkungen zu versehen. Dabei sollten die Verstärkungen aber auf die seitlichen Begrenzungskanten des Lappenkörpers beschränkt sein. Auf diese Weise kann der Lappenkörper noch problemlos ein gewisses Maß an Verformung im Sinne einer Krümmung um eine etwa senkrechte Krümmungsachse aufnehmen. Auch dies erhöht die Universalität des neuen Schmutzfängers. Aus Gründen der gleichzeitig zu berücksichtigenden Stabilität sollten die seitlichen Verstärkungen des Lappenkörpers bis in den Befestigungsabschnitt hinein vorgesehen sein, so daß sie auch den Verformbereich seitlich begrenzen.

Der Verformbereich kann aus demselben Material wie der restliche Lappenkörper ausgebildet sein, wobei das Material in dem Verformbereich faltenförmig angeordnet ist und eine geringere Materialstärke als bei dem restlichen Lappenkörper aufweist. Die Ausbildung des Verformbereichs aus demselben Material wie es bei dem restlichen Lappenkörper zur Anwendung kommt ist besonders aus Kostengründen vorteilhaft. Dabei läßt sich die notwendige Verformbarkeit in der Haupterstreckungsebene des Lappenkörpers dadurch erreichen, daß das Material in dem Verformbereich faltenförmig angeordnet ist und eine reduzierte Materialstärke aufweist. Bei einer Ausdehnung des Verformbereichs ziehen sich die Falten des Materials auseinander, bei einem Komprimieren des Verformbereichs werden die Falten zusammengeschoben.

Als Alternative kann in dem Verformbereich auch ein verformbares Draht- oder Textilgewebe vorgesehen sein. Hierbei kommt es nicht darauf an, daß das Draht- bzw. Textilgewebe wasserdicht ausgebildet ist, da ein Schmutzfänger zum Zurückhalten von Wasser nur in Form von Spritzwasser vorgesehen ist. Das Draht- bzw. Textilgewebe kann bei der Herstellung des Schmutzkörpers problemlos in das für den Lappenkörper typische Gummi- oder Kunststoffmaterial einvulkanisiert werden.

Der Befestigungsabschnitt des Lappenkörpers kann auch bei dem neuen Schmutzfänger durch ein streifenförmiges Metallblech verstärkt sein, über das der Schmutzfänger an die Außenkante des Kotflügels angeklemmt wird. Vorzugsweise weist der Befestigungsabschnitt jedoch über seine wesentliche Längserstreckung entlang der Außenkante des Kotflügels eine wulstförmige Verdickung zum Einschieben in eine nutförmige, an ihrem einen Ende geschlossene Ausnehmung in einem an der Kotflügelkante anzubringenden, separaten Befestigungsteil auf. Die wulstförmige Verdickung ist gleichzeitig eine Verstärkung des Lappenkörpers in dem Befestigungsabschnitt und Mittel zur Befestigung des Lappenkörpers an dem Befestigungsteil. Wenn das Befestigungsteil an der Außenkante des Kotflügels anmontiert ist, muß der Lappenkörper mit seiner wulstförmigen Verdickung nur in die nutförmige Ausnehmung in dem Befestigungsteil eingeschoben werden. Hierbei wird der Verformbereich des Lappenkörpers zur Anpassung an die gegebene Kotflügelform verformt. Wird der Lappenkörper bis zu dem geschlossenen Ende in die Ausnehmung eingeschoben, so ist er darin allein durch die erfolgte Verformung des Verformbereichs ausreichend fixiert. Eine zusätzliche Verklemmung oder Verschraubung ist nicht erforderlich. Dies setzt natürlich voraus, daß die Ausnehmung in dem Befestigungsteil genau auf die wulstförmige Verdickung des Befestigungsabschnitts abgestimmt ist, so daß hier eine gegenseitige Verspannung auftritt.

Das Befestigungsteil kann einen einteiligen Grundkörper aus verformbarem Material aufweisen, der eine durchgehende Dichtlippe zur äußeren Anlage an den Kotflügel und untereinander beabstandete, die nutförmige Ausnehmung aufweisende Halteelemente für den Lappenkörper ausbildet. Die Dichtlippe sorgt dabei für einen geschlossenen Übergang der äußeren Oberfläche des Kotflügels in den Schmutzfänger. Daß der Grundkörper trotz der durchgehenden Dichtlippe vollständig an die Außenkante des Kotflügels anpaßbar ist, wird durch die Beabstandung der die nutförmige Ausnehmung aufweisenden Halteelemente sichergestellt. Die Freiräume zwischen den einzelnen Halteelementen garantieren die notwendige Verformbarkeit des Befestigungsteils.

Um die Anpassung des Grundkörpers an die jeweilige Kotflügelform zu erleichtern, kann in dem Grundkörper ein plastisch verformbarer, entlang der Außenkante des Kotflügels verlaufender Draht vorgesehen sein. Der Befestigungsteil kann so durch Verbiegen des Drahts an die Kotflügelform angepaßt werden und behält die ihm gegebene Form zur leichten Anbringung an den Kotflügel bei. Der verformbare Draht kann nachträglich in eine Ausnehmung in dem Grundkörper eingefügt werden. Es ist jedoch zu bevorzugen, wenn der verformbare Draht unmittelbar bei der Herstellung des Grundkörpers in diesen einvulkanisiert wird.

Bei dem Befestigungsteil können Klemmelemente über Filmscharniere an mehrere Halteelemente angelenkt sein, wobei die Klemmelemente die Außenkante des Kotflügels umgreifend durch Klemmschrauben oder Klemmfedern auf die Dichtlippe des Grundkörpers hin beaufschlagbar sind. Die über Filmscharniere mit den Halteelementen verbundenen Klemmelemente können in einem einzigen Herstellungsgang zusammen mit dem Grundkörper des Befestigungsteils beispielsweise durch Spritzen hergestellt werden. Die Klemmelemente sind die Außenkante des Kotflügels umgreifend vorgesehen und durch Klemmschrauben oder Klemmfedern direkt auf die Dichtlippe des Grundkörpers hin beaufschlagbar, so daß die Befestigungslage des Befestigungsteils an der Kotflügelkante von dem Falzwinkel der Außenkante des Kotflügels unabhängig ist. Die Klemmelemente werden vorzugsweise durch Klemmschrauben beaufschlagt, die anschließend durch den in das Befestigungsteil eingeschobenen Lappenkörper abgedeckt werden. So sind die Klemmschrauben einerseits leicht zugänglich und rufen andererseits keinen negativen optischen Eindruck des Schmutzfängers hervor.

Die Erfindung wird im folgenden anhand eines Ausführungsbeispiels näher erläutert und beschrieben. Es zeigt:
- Figur 1: die Grundform eines Lappenkörpers des Schmutzfängers nach seiner Herstellung,
- Figur 2: die an eine erste Kotflügelform angepaßte Form des Lappenkörpers gemäß Figur 1,
- Figur 3: die an eine zweite Kotflügelform angepaßte Form des Lappenkörpers gemäß Figur 1,
- Figur 4: einen ersten Querschnitt durch den Lappenkörper gemäß Figur 1 in horizontaler Richtung,
- Figur 5: einen zweiten Querschnitt durch eine erste Ausführungsvariante des Lappenkörper gemäß Figur 1,
- Figur 6: eine den Querschnitt gemäß Figur 5 entsprechende Abbildung einer zweiten Ausführungsvariante des Lappenkörpers gemäß Figur 1,
- Figur 7: eine perspektivische Ansicht des Schmutzfängers mit dem Lappenkörper gemäß den Figuren 1 und 6,
- Figur 8: einen Querschnitt durch ein Befestigungsteil des Schmutzfängers gemäß Figur 7 und
- Figur 9: das Befestigungsteil gemäß Figur 8 in einer Ansicht von unten.

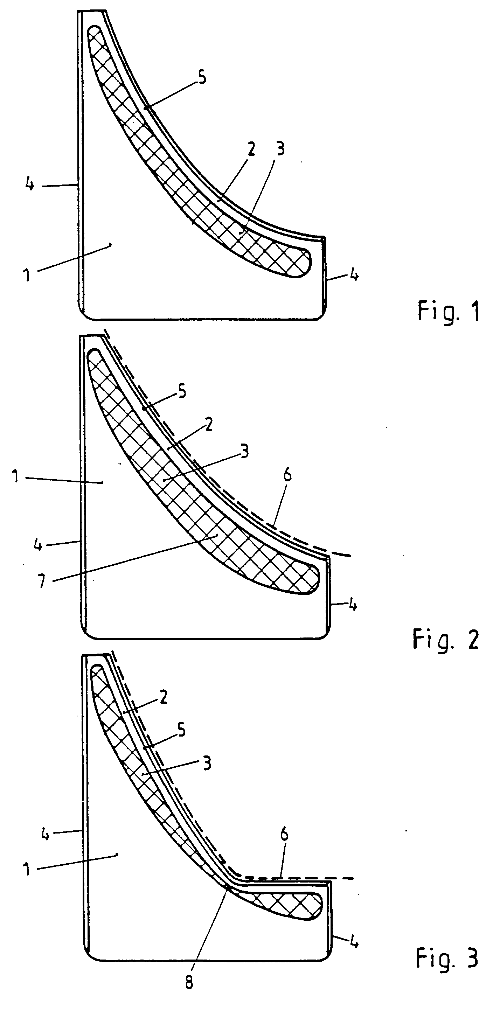

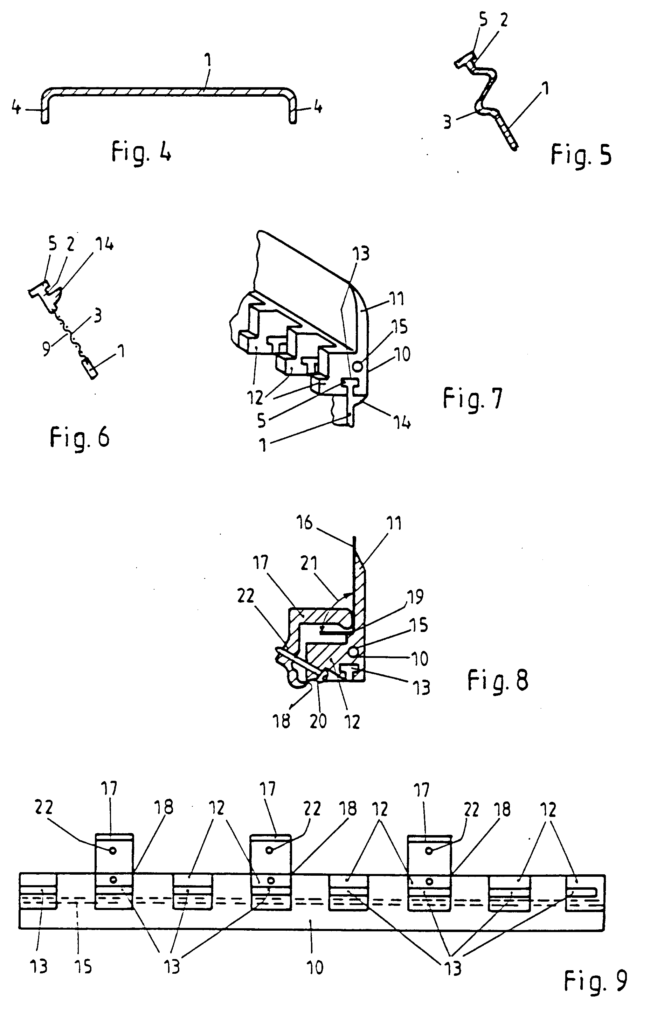

In Figur 1 ist ein Lappenkörper 1 eines Schmutzfängers für Kraftfahrzeuge in einer durch die Herstellung vorgegebenen Grundform dargestellt. Der Lappenkörper 1 weist einen Befestigungsabschnitt 2 auf, der nach der Anbringung des Schmutzfängers an einen Kotflügel entlang der Außenkante des Kotflügels verläuft. Der Befestigungsabschnitt 2 ist streifenförmig ausgebildet und weist eine geringe Erstreckung senkrecht zu der Außenkante des Kotflügels auf. An dem Befestigungsabschnitt 2 schließt sich ein in dem Lappenkörper 1 vorgesehener Verformbereich 3 an. Der Verformbereich 3 ist flächig ausgebildet und erstreckt sich über dessen wesentliche Ausdehnung parallel zu dem Befestigungsabschnitt 2. In dem Verformbereich 3 weist der Lappenkörper 1 einen reduzierten Verformungswiderstand auf, wobei der Verformbereich zur Anpassung des Schmutzfängers an verschiedene Kotflügelformen in Richtungen in der Haupterstreckungsebene des Lappenkörpers, die mit der Zeichenebene zusammenfällt, elastisch und/oder plastisch verformbar ist. Der Verformbereich 3 absorbiert so die bei den verschiedenen Kotflügelformen auftretenden, häufig dreidimensionalen Krümmungen der Außenkante. Die Stabilität des Lappenkörpers 1 ist bei dem Schmutzfänger dennoch gewährleistet, da der Verformbereich 3 vollständig von dem restlichen Lappenkörper 1 umschlossen ist. Insbesondere sind an den seitlichen, mehr oder weniger senkrecht zu der Kotflügelkante verlaufenden Begrenzungskanten des Lappenkörpers als Rippen 4 ausgebildete Verstärkungen vorgesehen. Die Rippen 4 enden in den Befestigungsabschnitt 2. Die Rippen 4 verhindern ein Knicken des Lappenkörpers 4 um eine horizontale Achse, stehen gleichzeitig aber einer leichten Krümmung um eine vertikale Achse nicht entgegen. In dem Befestigungsabschnitt 2 ist eine sich entlang der Außenkante des Kotflügels erstreckende wulstförmige Verdickung zur Befestigung des Lappenkörpers an einem Befestigungsteil vorgesehen, auf das im Zusammenhang mit Figur 7 noch näher eingegangen wird.

Die Figuren 2 und 3 zeigen den Lappenkörper 1 gemäß Figur 1 nach der Anpassung an verschiedene, jeweils in Form einer gestrichelten Linie wiedergegebene Kotflügelformen 6. Diese Kotflügelformen 6, die dem Verlauf der Außenkante verschiedener Kotflügel entsprechen, verlaufen in der Realität häufig dreidimensional gekrümmt. Die Funktionsweise des Verformbereichs 3 ergibt sich jedoch bereits deutlich aus der zweidimensionalen Darstellung der Figuren 2 und 3. Bei der Anpassung an die Kotflügelformen 6 wird der Verformbereich 3 beispielsweise im Bereich 7 gemäß Figur 2 gedehnt oder im Bereich 8 gemäß Figur 3 zusammengeschoben. Diese zum Teil erheblichen Formveränderungen des Verformbereichs 3 kompensieren die unterschiedlichen Kotflügelformen 6, so daß der restliche Lappenkörper 1 hiervon unbeeinflußt bleibt. Der Befestigungsabschnitt 2 ist ob seiner quasi linienförmigen Ausbildung problemlos an die verschiedenen Kotflügelformen 6 anpaßbar. Insgesamt ermöglicht der Verformbereich 3 mit einer einzigen Grundform des Lappenkörpers 1 eine große Vielfalt von Kotflügelformen 6, d. h. nahezu alle Kraftfahrzeugtypen abzudecken.

Die Stabilisierung des Lappenkörpers 2 durch die Rippen 4 ist noch einmal in Figur 4 hervorgehoben. Statt der Rippen 4 könnten natürlich auch andere Formen der Verstärkung der seitlichen Begrenzungskanten vorgesehen sein. Zu denken wäre beispielsweise an eingegossene, federelastische Drahteinlagen.

Figur 5 zeigt eine erste Ausführungsvariante des Verformbereichs 3 des Lappenkörpers 1 in einem Querschnitt senkrecht zu der Außenkante des Kotflügels. Der Verformbereich 3 besteht aus demselben Material wie der restliche Lappenkörper 1, das Material weist in dem Verformbereich 3 jedoch eine geringere Materialdicke auf. Darüberhinaus ist das Material dort faltig angeordnet. Dadurch ist ein zusammenschieben und Auseinanderziehen des Verformbereichs 3 möglich. Natürlich ermöglicht der Verformbereich 3 auch, Verkippungen des Befestigungsabschnitts 2 gegenüber dem restlichen Lappenkörper 1 zu kompensieren.

Eine weitere Ausführungsvariante des Verformbereichs 3 des Lappenkörpers 1 gemäß Figur 1 ist Figur 6 zu entnehmen. Hier ist in dem Verformbereich 3 ein verformbares Gewebe 9 aus Drähten oder Textilfäden vorgesehen. Die Verformbarkeit des Gewebes 9 ist auch in der Haupterstreckungsrichtung des Lappenkörpers 1 gegeben. Das Gewebe 3 muß nicht notwendigerweise wasserdicht ausgebildet sein, da der Schmutzfänger Wasser nur in Form von Spritzwasser zurückzuhalten hat.

Figur 7 zeigt ein Befestigungsteil 10 für den Lappenkörper gemäß den Figuren 1 und 6. Das Befestigungsteil 10 weist eine Dichtlippe 11 zur äußeren Anlage an dem Kotflügel auf. Weiterhin sind untereinander beabstandete Halteelemente 12 vorgesehen. Das Befestigungsteil 10 besteht aus verformbarem Material, wobei die Abstände zwischen den Halteelementen 12 eine vollständige und ungehinderte Anpassung der Dichtlippe 11 an den Kotflügel erlauben. In den Halteelementen ist eine nutförmige Ausnehmung 13 vorgesehen, in die der Lappenkörper mit der Verdickung 5 eingeschoben ist. Hierdurch erfolgt die Befestigung des Lappenkörpers 1 an dem Befestigungsteil 10 unter Definition einer kontrollierten Lage des Lappenkörpers 1. Dazu ist die Ausnehmung 13 in dem Befestigungsteil 10 einseitig geschlossen ausgebildet, und an dem Lappenkörper 1 ist ein stabilisierender Anschlag 14 vorgesehen. Das Einschieben des Lappenkörpers 1 in das Befestigungsteil 10 erfolgt erst nach dessen Montage an den jeweiligen Kotflügel. Die zuvorige Anpassung des Befestigungsteils 10 an den Kotflügel wird durch einen in den Grundkörper 10 eingegossenen, plastisch verformbaren Draht 15 erleichtert, der entlang der Außenkante des Kotflügels verläuft.

Zur Befestigung des Befestigungsteils 10 an dem Kotflügel 16 sind Klemmelemente 17 vorgesehen. Ein solches Klemmelement 17 ist in Figur 8 im Querschnitt dargestellt. Das Klemmelement 17 ist über ein Filmscharnier 18 mit einem Halteelement 12 verbunden. Die Verbindung erfolgt bei einer einstückigen Ausbildung des Befestigungsteils 10 mit den Klemmelementen 17. Das Klemmelement 17 gemäß Figur 8 umgreift die Außenkante 19 des Kotflügels 16 und wird durch eine Klemmschraube 20 auf die Dichtlippe 11 hin beaufschlagt. Ein möglicherweise variierender Falzwinkel 21 ist für die Befestigungslage des Befestigungsteils 10 an dem Kotflügel 16 somit vorteilhafterweise ohne Belang. Die Klemmschraube 20, die sich vorzugsweise selbst ein Gewinde in einem Durchgangloch 22 in dem Klemmelement 17 schneidet, wird durch den in die Ausnehmung 13 eingeschobenen Lappenkörper bei dem fertig montierten Schmutzfänger verdeckt. Sie stört so nicht den optischen Gesamteindruck des Schmutzfängers.

Figur 9 zeigt das einstückig mit den Klemmelementen 17 ausgebildete Befestigungsteil 10 gemäß den Figuren 7 und 8 von unten. Hierbei ist zusätzlich das geschlossene Ende 23 der nutförmigen Ausnehmung 13 in dem Befestigungsteil 10 zu erkennen. Die Klemmelemente 17 müssen, wie hier auch dargestellt ist, nicht an jedem Halteelement 12 vorgesehen sein. Es reicht aus, wenn insgesamt mehrere Klemmelemente 17, vorzugsweise mindestens drei, vorgesehen sind.

### BEZUGSZEICHENLISTE

- 1: Lappenkörper
- 2: Befestigungsabschnitt
- 3: Verformbereich
- 4: Rippe
- 5: Verdickung
- 6: Kotflügelformen
- 7: Bereich
- 8: Bereich
- 9: Gewebe
- 10: Befestigungsteil
- 11: Dichtlippe
- 12: Halteelement
- 13: Ausnehmung
- 14: Anschlag
- 15: Draht
- 16: Kotflügel
- 17: Klemmelement
- 18: Filmscharnier
- 19: Außenkante
- 20: Klemmschraube
- 21: Falzwinkel
- 22: Durchgangsloch
- 23: Ende

## Patentansprüche

1. Schmutzfänger für Kraftfahrzeuge mit einem Lappenkörper zur Befestigung an einer insbesondere dreidimensional gekrümmten Außenkante eines Kotflügels, wobei der Lappenkörper (1) zum Kotflügel (16) hin in einem streifenförmigen Befestigungsabschnitt (2) mit geringer Erstreckung senkrecht zu der Außenkante (19) des Kotflügels (16) endet und wobei der Lappenkörper (1) in einem direkt an den Befestigungsabschnitt (3) angrenzenden und vollständig durch den restlichen Lappenkörper (1) umschlossenen begrenzten Verformbereich (3) mit flächiger Ausdehnung längs des Befestigungsabschnitts (2) einen im Vergleich zu dem restlichen Lappenkörper (1) reduzierten Verformungswiderstand aufweist, **dadurch gekennzeichnet, daß** der Verformbereich (3) zur Anpassung des Schmutzfängers an verschiedene Kotflügelformen (6) auch in Richtung in der Haupterstreckungsebene des Lappenkörpers (1) elastisch und/oder plastisch verformbar ist.

2. Schmutzfänger nach Anspruch 1, **dadurch gekennzeichnet**, daß der Lappenkörper (1) an seinen seitlichen, von dem Kotflügel (16) weg verlaufenden Begrenzungskanten bis in den Befestigungsabschnitt (2) hinein verstärkt ausgebildet ist.

3. Schmutzfänger nach Anspruch 1 oder 2, **dadurch gekennzeichnet**, daß der Verformbereich (3) aus demselben Material wie der restliche Lappenkörper (1) ausgebildet ist, wobei das Material in dem Verformbereich (3) faltenförmig angeordnet ist und eine geringere Materialstärke als bei dem restlichen Lappenkörper (1) aufweist.

4. Schmutzfänger nach Anspruch 1 oder 2, **dadurch gekennzeichnet**, daß in dem Verformbereich (3) ein verformbares Draht- oder Textilgewebe (9) vorgesehen ist.

5. Schmutzfänger nach einem der Ansprüche 1 bis 4, **dadurch gekennzeichnet**, daß der Befestigungsabschnitt (2) über seine wesentliche Längserstreckung entlang der Außenkante (19) des Kotflügels (16) eine wulstförmige Verdickung (5) zum Einschieben in eine nutförmige, an ihrem einen Ende geschlossene Ausnehmung (13) in einem an der Außenkante (19) des Kotflügels (16) anzubringendes Befestigungsteil (10) aufweist.

6. Schmutzfänger nach Anspruch 5, **dadurch gekennzeichnet**, daß das Befestigungsteil (10) einen einteiligen Grundkörper aus verformbarem Material aufweist, der eine durchgehende Dichtlippe (11) zur äußeren Anlage an den Kotflügel (16) und untereinander beabstandete, die nutförmige Ausnehmung (13) aufweisende Halteelemente (12) für den Lappenkörper (1) ausbildet.

7. Schmutzfänger nach Anspruch 6, **dadurch gekennzeichnet**, daß in dem Grundkörper des Befestigungsteils (10) ein plastisch verformbarer, entlang der Außenkante (19) des Kotflügels (16) verlaufender Draht (15) vorgesehen ist.

8. Schmutzfänger nach Anspruch 6 oder 7, **dadurch gekennzeichnet**, daß Klemmelemente (17) über Filmscharniere (18) an mehrere Halteelemente (12) angelenkt sind, wobei die Klemmelemente (17) die Außenkante (19) des Kotflügelkante (16) umgreifend durch Klemmschrauben (20) oder Klemmfedern auf die Dichtlippe (11) des Befestigungsteils (10) hin beaufschlagbar sind.

## Claims

1. Mud flap for motor cars having a flap body to be attached to an, in particular three-dimensionally curved, outside edge of a wing, the flap body (1) ending towards the wing (16) with a stripe-shaped attachment section (2) having a small extension perpendicular to the outside edge (19) of the wing (16), and the flap body (1) having a reduced deformation resistance, as compared to the rest of the flap body (1), within a deformation region (3) directly adjoining the attachment section (2), totally surrounded by the rest of the flap body (1) and having a two-dimensional extension along the attachment section (2), **characterized in that** for adaption of the mud flap to different wing shapes (6), the deformation region (3) is elastically and/or plastically deformable also in the main extension direction of the flap body (1).

2. Mud flap according to claim 1, **characterized in that** the flap body (1) is reinforced at its side edges, running away from the wing (16), right in the attachment section (2).

3. Mud flap according to claim 1 or 2, **characterized in that** the deformation region (3) is made of the same material as the rest of the flap body (1), the material, in the deformation region (3), being arranged in folds and having a smaller material thickness than in the rest of the flap body (1).

4. Mud flap according to claim 1 or 2, **characterized in that** a deformable wire or textile cloth (9) is provided in the deformation region (3).

5. Mud flap according to one of the claims 1 to 4, **characterized in that** the attachment section (2), over its substantial lengthwise extension along the outside edge (19) of the wing (16), comprises a bulge-shaped strengthening (5) for putting in a groove-shaped exclusion (13) closed at one of its ends and provided in an attachment part (10) to be arranged at the outside edge (19) of the wing (16).

6. Mud flap according to claim 5, **characterized in that** the attachment part (10) comprises a one-part main body made of a deformable material and having a continuous sealing lip for laying against the wing (16) and support parts (12) for the flap body (1) which are at distances apart from each other and comprise the groove-shaped exclusion (13).

7. Mud flap according to claim 6, **characterized in that** a plastically deformable wire (15) running along the outside edge (19) of the wing (16) is provided within the main body of the attachment part (10).

8. Mud flap according to claim 6 or 7, **characterized in that** clamping elements (17) are hinged to some support elements (12) via film hinges (18), which clamping elements (17) gripping around the outside edge (19) of the wing (16) are forceable towards the sealing lip (11) of the attachment part (10) by clamping screws (20) or clamping springs.

## Revendications

1. Garde-boue pour véhicule automobile avec un corps de bavette destiné à être fixé sur un bord extérieur, courbé en particulier en trois dimensions d'une aile, dans lequel le corps de bavette (1) se termine vers l'aile (16) dans une portion de fixation (2) en forme de bande avec une extension réduite perpendiculairement au bord extérieur (19) de l'aile (16) et dans lequel le corps de bavette (1) présente, dans une zone de déformation (3) limitée, directement adjacente à la portion de fixation (3) et totalement entourée par le corps de bavette (1) restant, avec extension à plat le long de la portion de fixation (2) une résistance à la déformation réduite par rapport au corps de bavette (1) restant, caractérisé en ce que la zone de déformation (3), pour l'adaptation du garde-boue à des formes d'ailes (6) différentes, est déformable élastiquement et/ou plastiquement aussi en direction du plan d'extension principal du corps de bavette (1).

2. Garde-boue sel on la revendication 1, caractérisé en ce que le corps de bavette (1) est renforcé sur ses bords de délimitation latéraux, s'éloignant de l'aile (16), jusque dans la portion de fixation (2).

3. Garde-boue selon la revendication 1 ou 2, caractérisé en ce que la zone de déformation (3) est faite dans le même matériau que le corps de bavette (1) restant, le matériau dans la zone de déformation (3) étant plissé et présentant une épaisseur de matériau inférieure à ce qu'elle est dans le corps de bavette (1) restant.

4. Garde-boue selon la revendication 1 ou 2, caractérisé en ce qu'il est prévu dans la zone de déformation (3) un tissu de fil métallique ou textile (9) déformable.

5. Garde-boue selon l'une des revendications 1 à 4, caractérisé en ce que la portion de fixation (2) présente, sur son extension longitudinale essentielle, le long du bord extérieur (19) de l'aile (16), une surépaisseur (5) en forme de bourrelet, destinée à être introduite dans un évidement (13) en forme de rainure fermé à l'une de ses extrémités, dans un élément de fixation (10), à placer sur le bord extérieur (19) de l'aile (16).

6. Garde-boue selon la revendication 5, caractérisé en ce que l'élément de fixation (10) présente un corps de base en une partie dans un matériau déformable, qui forme une lèvre d'étanchéité (11) continue pour l'application extérieure contre l'aile (16) et des éléments de maintien (12) espacés les uns des autres présentant l'évidement (13) en forme de rainure, pour le corps de bavette (1).

7. Garde-boue selon la revendication 6, caractérisé en ce que dans le corps de base de l'élément de fixation (10) est prévu un fil métallique (15) plastiquement déformable, s'étendant le long du bord extérieur (19) de l'aile (16).

8. Garde-boue sel on la revendication 6 ou 7, caractérisé en ce que des éléments de serrage (17) sont articulés, par des charnières en pellicule (18), sur plusieurs éléments de maintien (12), les éléments de serrage (17), passant sous le bord extérieur (19) du bord (16) de l'aile, pouvant être sollicités par des vis de serrage (20) ou des ressorts de serrage sur la lèvre d'étanchéité (11) de l'élément de fixation (10).
